# EUROPEAN PATENT APPLICATION

(11) **EP 3 173 970 A1**
(43) Date of publication of application: **31.05.2017**
(21) Application number: 16188020.8
(22) Date of filing: 09.09.2016
(51) Int. Cl.: G06K 9/00

(54) **IMAGE PROCESSING METHOD AND APPARATUS**

(30) Priority: 26.11.2015 CN 201510847294
(71) Applicant: Xiaomi Inc., Beijing 100085 (CN)
(72) Inventor: CHEN, Zhijun, Haidian District, Beijing 100085 (CN); WANG, Pingze, Haidian District, Beijing 100085 (CN); WANG, Baichao, Haidian District, Beijing 100085 (CN)
(74) Representative: Cougard, Jean-Marie

(57) **Abstract**

An image processing method and an image processing apparatus are provided. The method includes: detecting (S101) an image to identify at least one human face contained in an image; acquiring (S102) human face characteristic information of each human face in the image; determining (S103) each human face as a target human face or a non-target human face according to the human face characteristic information; and performing (S104) a deletion process on the non-target human face.

## Description

### TECHNICAL FIELD

The present disclosure generally relates to the field of an image processing technology, and more particularly, to an image processing method and an image processing apparatus.

### BACKGROUND

An album program is a common program in a mobile terminal, such as a smart phone, a panel computer, etc. The album program is used for managing and displaying images in the mobile terminal.

At present, the album program in the terminal may cluster human faces in an image to classify the same or similar human faces into one album, so as to form a human face album.

### SUMMARY

Embodiments of the present disclosure provide an image processing method and an image processing apparatus, which include following technical solutions.

According to a first aspect of embodiments of the present disclosure, there is provided an image processing method, including:
detecting an image to identify at least one human face contained in an image;
acquiring human face characteristic information of each human face in the image;
determining each human face as a target human face or a non-target human face according to the human face characteristic information; and
performing a deletion process on the non-target human face.

In an embodiment, the human face characteristic information includes at least one of: a position of the human face in the image, an inclined angle of the human face in the image, depth information of the human face in the image, a ratio of an area occupied by the human face in the image and a number of appearances representative of the number of times the human face appears in a plurality of images including said image.

In an embodiment, if the human face characteristic information includes the position of the human face in the image, said determining each human face as the target human face or the non-target human face according to the human face characteristic information includes:
determining a target photographed area according to the position of each human face in the image and human face distribution of said image; and
determining a human face in the target photographed area as the target human face, and determining a human face outside of the target photographed area as the non-target human face.

In an embodiment, if the human face characteristic information includes the position of the human face in the image or the depth information of the human face in the image, and the at least one human face includes two or more human faces, said determining each human face as the target human face or the non-target human face according to the human face characteristic information includes:
determining a target photographed area according to the position of each human face in the image and human face distribution; and
determining a human face in the target photographed area as the target human face, and calculating a distance from the target human face to another human face in the image or calculating a difference between depth information of the target human face and depth information of another human face in the image;
determining the other one human face as a target human face if the distance is less than a preset distance or the difference is less than a preset difference; and
determining the other one human face as a non-target human face if the distance is larger than or equal to the preset distance or the difference is larger than or equal to the preset difference.

In an embodiment, if the human face characteristic information includes the inclined angle of the human face in the image, said determining each human face as the target human face or the non-target human face according to the human face characteristic information includes:
determining a human face with the inclined angle less than a preset angle as the target human face; and
determining a human face with the inclined angle larger than or equal to the preset angle as the non-target human face.

In an embodiment, if the human face characteristic information includes the ratio of the area occupied by the human face in the image, said determining each human face as the target human face or the non-target human face according to the human face characteristic information includes:
determining a human face with the ratio larger than a preset ratio as the target human face; and
determining a human face with the ratio less than or equal to the preset ratio as the non-target human face.

In an embodiment, if the human face characteristic information includes the number of appearances of the human face in a plurality of images including said image, determining each human face as a target human face or a non-target human face according to the human face characteristic information includes:
determining a human face as a target human face if the number of appearances of said human face is larger than a preset number of appearances; and
determining a human face as a non-target human face if the number of appearances of said human face is less than or equal to the preset number of appearances

In an embodiment, the method further includes:
clustering each target human face to obtain at least one human face; in which each human face album corresponds to one distinct human face.

According to a second aspect of embodiments of the present disclosure, there is provided an image processing apparatus, including:
a detecting module, configured to detect an image to identify at least two human faces contained in the image;
an acquiring module, configured to acquire human face characteristic information of each human face detected by the detecting module in the image;
a determining module, configured to determine each human face as a target human face or a non-target human face according to the human face characteristic information acquired by the acquiring module; and
a deleting module, configured to perform a preset deletion process on the non-target human face determined by the determining module.

In an embodiment, the human face characteristic information includes at least one of: a position of the human face in the image, an inclined angle of the human face in the image, depth information of the human face in the image, a ratio of an area occupied by the human face in the image and a number of appearances representative of the number of times the human face appears in a plurality of images including said image.

In an embodiment, the determining module includes:
a first area determining sub-module, configured to determine a target photographed area according to the position of each human face in the image and human face distribution of the image; and
a first determining sub-module, configured to determine a human face in the target photographed area determined by the first area determining sub-module as the target human face, and determine a human face outside of the target photographed area as a non-target human face.

In an embodiment, if the human face characteristic information includes the position of the human face in the image or the depth information of the human face in the image, and the at least one human face includes two or more human faces, the determining module includes:
a second area determining sub-module, configured to determine a target photographed area according to the position of each human face in the image and human face distribution of the image;
a calculating sub-module, configured to determine a human face in the target photographed area as a target human face, calculate a distance from the target human face to another human face in the image or calculate a difference between depth information of the target human face and depth information of another human face in the image;
a second determining sub-module, configured to determine the other one human face as the target human face if the distance is less than a preset distance or the difference is less than a preset difference; and
a third determining sub-module, configured to determine the other one human face as a non-target human face if the distance is larger than or equal to the preset distance or the difference is larger than or equal to the preset difference.

In an embodiment, if the human face characteristic information includes the inclined angle of the human face in the image, the determining module includes:
a fourth determining sub-module, configured to determine a human face with the inclined angle less than a preset angle as a target human face; and
a fifth determining sub-module, configured to determine a human face with the inclined angle larger than or equal to the preset angle as the non-target human face.

In an embodiment, if the human face characteristic information includes the ratio of the area occupied by the human face in the image, the determining module includes:
a sixth determining sub-module, configured to determine a human face with the ratio larger than a preset ratio as a target human face; and
a seventh determining sub-module, configured to determine a human face with the ratio less than or equal to the preset ratio as a non-target human face.

In an embodiment, if the human face characteristic information includes the number of appearances of the human face in a plurality of images including said image, the determining module includes:
an eighth determining sub-module, configured to determine a human face with a number of appearance larger than a preset number of appearances as a target human face; and
a ninth determining sub-module, configured to determine a human face with a number of appearance lower than or equal to the preset number of appearances as a non-target human face.

In an embodiment, the apparatus further includes:
a clustering module, configured to cluster each target human face to obtain at least one human face album; in which each human face album corresponds to one distinct human face.

According to a third aspect of embodiments of the present disclosure, there is provided an image processing apparatus, including:
a processor; and
a memory for storing instructions executable by the processor,
wherein the processor is configured to:
detect an image to identify at least two human faces contained in the image;
acquire human face characteristic information of each human face in the image;
determine each human face as a target human face or a non-target human face according to the human face characteristic information; and
perform a preset deletion process on the non-target human face

According to a fourth aspect of embodiments of the present disclosure, there is provided a computer program including instructions for executing the steps of the above image processing method when said program is executed by a computer.

In one particular embodiment, the steps of the method as defined above are determined by computer program instructions.

Consequently, according to a particular aspect, the invention is also directed to a computer program for executing the steps of a method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The solutions provided in embodiments of the present disclosure may have following beneficial effects.

With the above technical solutions, many human faces in the image are identified, and each human face is determined as the target human face or the non-target human face, and the preset deletion process is performed on the non-target human face. In this way, when clustering the human faces to obtain a human face album, the non-target human face would not appear in the human face album, thus preventing people irrelevant to the user from being collocated into the human face album, and improving the user experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing an image processing method according to an illustrative embodiment.
Fig. 2 is a flow chart showing step S103 in an image processing method according to an illustrative embodiment.
Fig. 3 is a flow chart showing step S103 in another image processing method according to an illustrative embodiment.
Fig. 4 is a flow chart showing step S103 in yet another image processing method according to an illustrative embodiment.
Fig. 5 is a flow chart showing step S103 in still another image processing method according to an illustrative embodiment.
Fig. 6 is a flow chart showing step S103 in further another image processing method according to an illustrative embodiment.
Fig. 7 is a flow chart showing another image processing method according to an illustrative embodiment.
Fig. 8 is a block diagram of an image processing apparatus according to an illustrative embodiment.
Fig. 9 is a block diagram of a determining module in an image processing apparatus according to an illustrative embodiment.
Fig. 10 is a block diagram of a determining module in another image processing apparatus according to an illustrative embodiment.
Fig. 11 is a block diagram of a determining module in yet another image processing apparatus according to an illustrative embodiment.
Fig. 12 is a block diagram of a determining module in still another image processing apparatus according to an illustrative embodiment.
Fig. 13 is a block diagram of a determining module in further another image processing apparatus according to an illustrative embodiment.
Fig. 14 is a block diagram of another image processing apparatus according to an illustrative embodiment.
Fig. 15 is a block diagram adaptive to an image processing device according to an illustrative embodiment.

### DETAILED DESCRIPTION

Reference will be made in detail to embodiments of the present disclosure. Unless specified or limited otherwise, the same or similar elements and the elements having same or similar functions are denoted by like reference numerals throughout the descriptions. The explanatory embodiments of the present disclosure and the illustrations thereof are not be construed to represent all the implementations consistent with the present disclosure. Instead, they are examples of the apparatus and method consistent with some aspects of the present disclosure, as described in the appended claims.

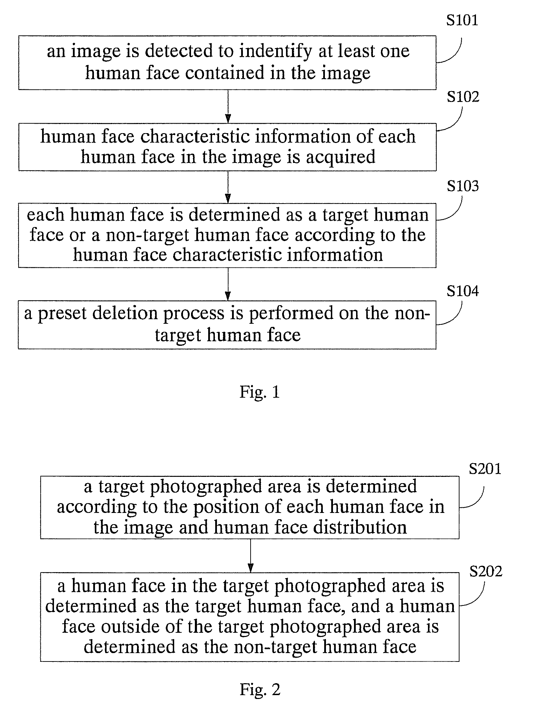

Embodiments of the present disclosure provide an image processing method, and the method may be applied in a terminal device. As shown in Fig. 1, the method includes steps S101-S104.

In step S101, an image is detected to identify at least one human face contained in the image.
In step S102, human face characteristic information of each human face in the image is acquired.
In step S103, each human face is determined as a target human face or a non-target human face according to the human face characteristic information.
In step S104, a preset deletion process is performed on each non-target human face. In a particular embodiment, the preset deletion process is performed so as to prevent each non-target human face from being included (or from appearing) in a human face album.

In this embodiment, at least one human face in the image is identified, each human face is determined as the target human face or the non-target human face, and the preset deletion process is performed on each non-target human face. In this way, when clustering the human faces to obtain a human face album, the non-target human face would not appear in the human face album, thus preventing people irrelevant to the user from being collected into the human face album, and improving the user experience.

For example, when a user takes a photo in a crowd scene, besides the target human face that the user wants to photograph, the photo may also include a human face of a passenger that the user does not want to photograph, i.e., the non-target human face. In the present disclosure, the target human face and non-target human face in the image are determined, and the preset deletion process is performed on the non-target human face. In this way, the passenger that the user does not want to photograph would not appear in the human face album acquired by clustering, thus improving the user experience.

In a particular embodiment, the terminal device performs the above-mentioned steps S101-S104 for each of a plurality of detected images.

In an embodiment, the human face characteristic information includes at least one of: a position of the human face in the image, an inclined angle of the human face in the image, depth information of the human face in the image, a ratio of an area occupied by the human face in the image and a number of appearances representative of the number of times the human face appears in a plurality of images including said image detected in S101.

In this embodiment, the human face characteristic information may be a position of the human face in the image, an inclined angle of the human face in the image, depth information of the human face in the image, a ratio of an area occupied by the human face in the image, a number of appearances of the human face in a plurality of images including the detected image, or the like. The target human face and non-target human face are determined according to one or more of the above-mentioned pieces of information, such that the determination may be more accurate.

Different kinds of human face characteristic information, determined in different ways correspondingly, will be described in detail hereinafter.

As shown in Fig. 2, in an embodiment, if the human face characteristic information includes the position of the human face in the image, the above detecting step S103 may include steps S201-S205 applied in the terminal device.
In step S201, a target photographed area is determined according to the position of each human face in the image and human face distribution of the image.
In step S202, a human face in the target photographed area is determined as the target human face, and a human face outside of the target photographed area is determined as the non-target human face.

In this embodiment, regardless of a single human face or many human faces contained in the image, the target photographed area may be determined according to the position of each human face in the image and the human face distribution. For example, an area at the center of image is determined as the target area, human faces in the target photographed area are determined as the target human faces, and human faces outside of the target photographed area are determined as the non-target human faces.

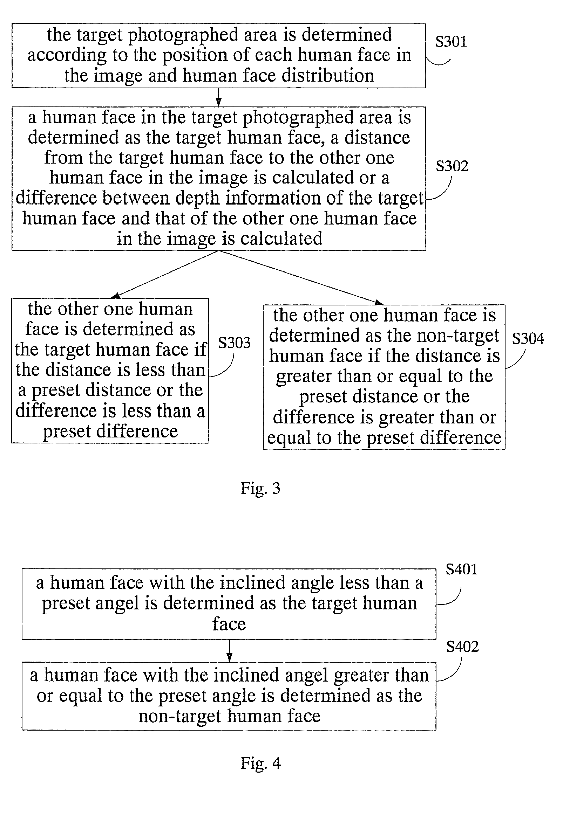

As shown in Fig. 3, in an embodiment, if the human face characteristic information includes the position of the human face in the image or the depth information of the human face in the image, and there are at least two human faces in the image, the above step S103 includes steps S301-S304 applied in the terminal device.
In step S301, a target photographed area is determined according to the position of each human face in the image and human face distribution.
In step S302, a human face in the target photographed area is determined as the target human face, and a distance from the target human face to another human face in the image is calculated or a difference between depth information of the target human face and that of the other one human face in the image is calculated.
In step S303, the other one human face is determined as the target human face if the distance is less than a preset distance or the difference is less than a preset difference.
In step S304, the other one human face is determined as the non-target human face if the distance is greater than or equal to the preset distance or the difference is greater than or equal to the preset difference.

In this embodiment, when the image contains at least a first human face and second human face distinct from the first human face, the target photographed area may be determined according to the position of each human face in the image and the human face distribution in the image. For example, the target photographed area is the center area of the image, and then a human face A in the center area may be determined as a target human face. A distance from the target human face A to the other one human face B in the image is calculated. If the distance is less than the preset distance, then the human face B is also determined as the target human face, thus a set of target human faces is [A, B]. Otherwise, the human face B is determined as a non-target human face. If the image also contains a human face C, a distance from the human face C to each of the set of the target human faces [A, B] is further calculated. If a distance from the human face C to any one in the set of the target human faces [A, B] is less than the preset distance, the human face C is determined as a target human face, and so on, each human face in the image is determined as the target human face or the non-target human face. In this way, the accuracy of determining human faces is improved.

In this embodiment, when the image contains at least a first human face and second human face distinct from the first human face, the target photographed area may be determined according to the position of each human face in the image and the human face distribution in the image. For example, the target photographed area is the center area of image, and then a human face A in the center area of image may be determined as the target human face. A difference between depth information of the target human face A and that of the other one human face B in the image is calculated. If the difference is less than the preset difference, then the human face B is determined as the target human face, otherwise human face B is determined as the non-target human face. In this way, the accuracy of determining human faces is improved.

As shown in Fig. 4, in an embodiment, if the human face characteristic information includes the inclined angle of human face in the image, the above step S103 may further include steps S401-S402 applied in the terminal device.
In step S401, a human face with the inclined angle less than a preset angel is determined as the target human face.
In step S402, a human face with the inclined angle greater than or equal to the preset angle is determined as the non-target human face.

In this embodiment, the human face may be determined according to the inclined angle of the human face in the image. If the inclined angle is less than the preset angle, the human face is determined as a target human face, and if the inclined angle is not less than the preset angle, the human face is determined as a non-target human face. In other words, the orientation of the human faces in the image is determined. Characteristic points on each human face may be positioned using human face characteristic point positioning algorithm, so as to determine the orientation that each human face has. In a particular example, a human face facing a camera lens is determined as the target human face, i.e., the human face facing a forward direction is determined as the target human face. If the inclined angle of the human face exceeds a certain angle, the human face may be determined as the non-target human face.

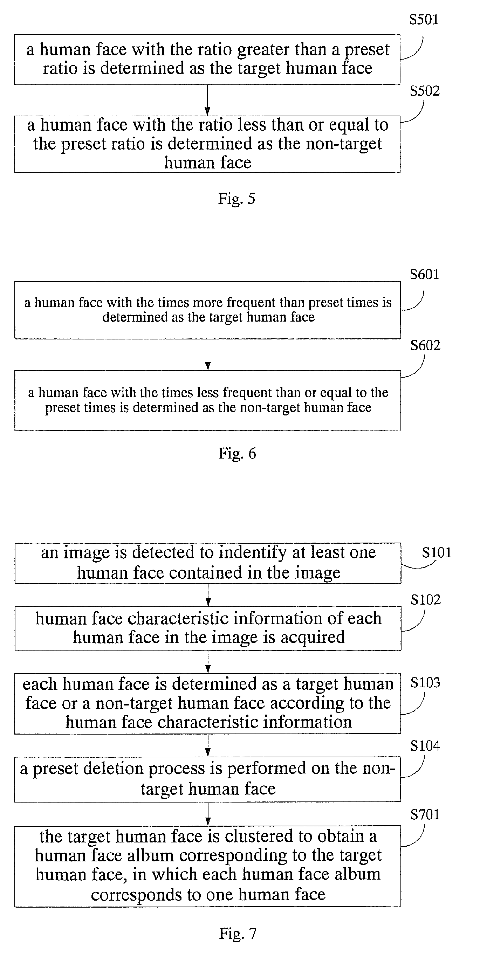

As shown in Fig. 5, in an embodiment, if the human face characteristic information includes the ratio of the area occupied by the human face in the image, the above step S103 may further include steps S501-S502 applied in the terminal device.
In step S501, a human face with the ratio greater than a preset ratio is determined as the target human face.
In step S502, a human face with the ratio less than or equal to the preset ratio is determined as the non-target human face.

In this embodiment, the human face may be determined according to the ratio of area occupied by the human face in the image. For example, if the ratio of area occupied by the human face in the image is relatively large, this indicates that the human face may be a main photographed object, and then the human face may be determined as a target human face. If, however, the ratio of area occupied by the human face in the image is relatively small, this indicates that the human face may not be the main photographed object, but may be a passenger photographed unintentionally, and then the human face is determined as a non-target human face.

As shown in Fig. 6, in an embodiment, wherein the human face characteristic information includes the number of appearances of the human face in a plurality of images including said image detected in S101, the above step S103 may further include steps S601-S602 applied in the terminal device. The number of appearances is representative of the number of times the human face appears in a plurality of images including said image detected in S101.
In step S601, a human face with a number of appearances larger than a preset number of appearances is determined as the target human face.
In step S602, a human face with a number of appearances less than or equal to the preset number of appearances is determined as the non-target human face.

In this embodiment, the human face may be determined according to the number of times the human face identified in S101 appears in each of a plurality of images, including the image detected in S101. If the number of appearances is relatively large, it indicates that the human face is a target human face. If the number of appearances is relatively low, such as only one appearance, it indicates that the human face belongs to a passenger which is photographed accidentally. In this way, each human face in the image may be accurately determined as a target human face or a non-target human face.

Of course, the human face may be determined as a target human face or a non-target human face based on any two or more items of human face characteristic information. For example, if the human face characteristic information includes the position of the human face in the image and the inclined angle of the human face in the image, the methods of determining the human face corresponding to these two items of human face characteristic information respectively may be used additively. For example, the target photographed area is determined according to the position of each human face in the image and the human face distribution, the human face in the target photographed area is determined as the target human face. For the human face outside of the target photographed area, the inclined angle is determined. The human face with the inclined angle greater than or equal to the preset angle is determined as a non-target human face, the human face with the inclined angle less than the preset angle is determined as a target human face. Of course, another additive way may be adopted. For example, the target photographed area is determined according to the position of each human face in the image and the human face distribution, the human face in the target photographed area and with the inclined angle less than the preset angle is determined as a target human face, the human face in the target photographed area and with the inclined angle greater than or equal to the preset angle is determined as a non-target human face, and the human face outside of the target photographed area is determined as a non-target human face. In this way, the accuracy of determining the human face is improved. The additive way of other two or more items of the human face characteristic information may be implemented by referring to the above additive ways.

As shown in Fig. 7, in an embodiment, the above method may further include step S701 applied in the terminal device.

In step S701, each target human face determined in S103 is clustered to obtain a human face album, in which each human face album corresponds to one distinct human face (i.e., each human face album is dedicated to a single human face).

In this embodiment, after performing the preset deletion process on the non-target human faces, each target human face may be clustered to obtain at least one human face album. Each human face album after clustering corresponds to one dedicated human face, which is convenient for the user to view.

Apparatus embodiments of the present disclosure described in the following may be used to implement method embodiments of the present disclosure.

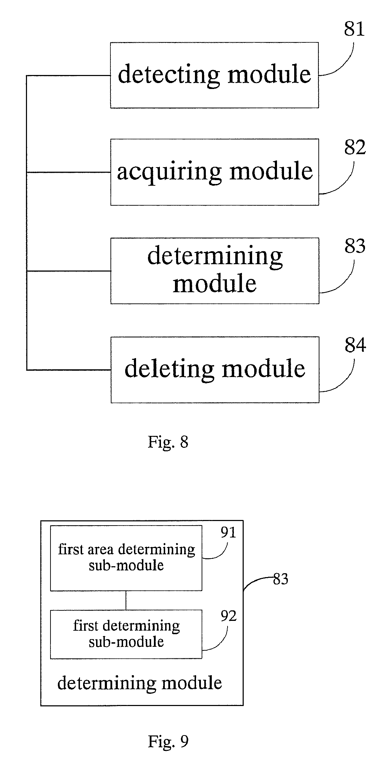

Fig. 8 is a block diagram of an image processing apparatus according to an illustrative embodiment. The apparatus may be implemented as all or a part of a server by hardware, software or combinations thereof. As shown in Fig. 8, the image processing apparatus includes a detecting module 81, an acquiring module 82, a determining module 83, and a deleting module 84.

The detecting module 81 is configured to detect an image to identify at least two faces contained in the image.

The acquiring module 82 is configured to acquire human face characteristic information of each human face detected by the detecting module 81 in the image.

The determining module 83 is configured to determine each human face as a target human face or a non-target human face according to the human face characteristic information acquired by the acquiring module 82.

The deleting module 84 is configured to perform a preset deletion process on the non-target human face determined by the determining module 83.

In this embodiment, at least human face in the image is identified, each human face is determined as the target human face or non-target human face, and the preset deletion process is performed on the non-target human face. In this way, when clustering the human faces to obtain a human face album, the non-target human face would not appear in the human face album, thus preventing people irrelevant to the user from being collected into the human face album, and improving the user experience.

For example, when a user takes a photo in a crowd scene, besides the target human face that the user wants to photograph, the photo may also include a human faces of a passenger that the user does not want to photograph, i.e., the non-target human face. In the present disclosure, the target human face and non-target human face in the image are determined, and the preset deletion process is performed on the non-target human face. In this way, the passenger that the user does not want to photograph would not appear in the human face album acquired by clustering, thus improving the user experience.

In an embodiment, the human face characteristic information includes at least one of: a position of the human face in the image, an inclined angle of the human face in the image, depth information of the human face in the image, a ratio of an area occupied by the human face in the image and times of the human face appearing in all images.

In this embodiment, the human face characteristic information may be a position of the human face in the image, an inclined angle of the human face in the image, depth information of the human face in the image, a ratio of an area occupied by the human face in the image, a number of appearances of the human face in a plurality of images including the detected image, or the like. The target human face and non-target human face are determined according to one or more of the above-mentioned pieces of information, such that the determination may be more accurate.

As shown in Fig. 9, in an embodiment, the determining module 83 includes a first area determining sub-module 91 and a first determining sub-module 92.

The first area determining sub-module 91 is configured to determine a target photographed area according to the position of each human face in the image and human face distribution of the image.

The first determining sub-module 92 is configured to determine a human face in the target photographed area determined by the first area determining sub-module 91 as the target human face, and determine a human face outside of the target photographed area as the non-target human face.

In this embodiment, regardless of a single human face or many human faces contained in the image, the target photographed area may be determined according to the position of each human face in the image and the human face distribution. For example, an area at the center of image is determined as the target area, human faces in the target photographed area are determined as the target human faces, and human faces outside of the target photographed area are determined as the non-target human faces.

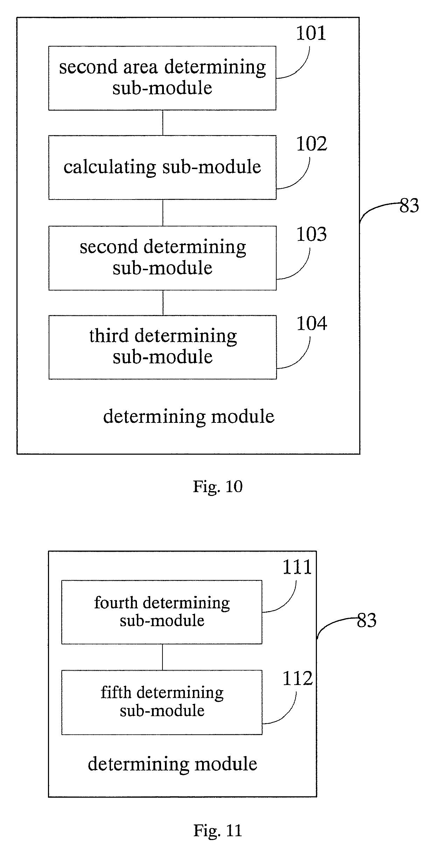

As shown in Fig. 10, in an embodiment, if the human face characteristic information includes the position of the human face in the image or the depth information of the human face in the image, and there are at least two human faces in the image, the determining module 83 includes a second area determining sub-module 101, a calculating sub-module 102, a second determining sub-module 103 and a third determining sub-module 104.

The second area determining sub-module 101 is configured to determine a target photographed area according to the position of each human face in the image and human face distribution of the image.

The calculating sub-module 102 is configured to determine a human face in the target photographed area as the target human face, calculate a distance from the target human face to another human face in the image or calculate a difference between depth information of the target human face and depth information of the other human face in the image.

The second determining sub-module 103 is configured to determine the other one human face as a target human face if the distance is less than a preset distance or the difference is less than a preset difference.

The third determining sub-module 104 is configured to determine the other one human face as the non-target human face if the distance is greater than or equal to the preset distance or the difference is greater than or equal to the preset difference.

In this embodiment, when the image contains at least two human faces, the target photographed area may be determined according to the position of each human face in the image and the human face distribution in the image. For example, the target photographed area is the center area of the image, and then a human face A in the center area may be determined as a target human face. A distance from the target human face to the other one human face B in the image is calculated, if the distance is less than the preset distance, then the human face B is also determined as a target human face, thus a set of target human faces is [A, B]. If the image also contains a human face C, a distance from the human face C to each of the set of the target human faces [A, B] is further calculated. If a distance from the human face C to any one in the set of the target human faces [A, B] is less than the preset distance, the human face C is determined as a target human face, and so on, each human face in the image is determined as the target human face or the non-target human face. In this way, the accuracy of determining human faces is improved.

In this embodiment, when the image contains at least two human faces, the target photographed area may be determined according to the position of each human face in the image and the human face distribution. For example, the target photographed area is the center area of image, and then a human face A in the center area of image may be determined as a target human face. A difference between depth information of the target human face and that of the other one human face B in the image is calculated. If the difference is less than the preset difference, then the human face B is determined as a target human face, otherwise human face B is determined as a non-target human face. In this way, the accuracy of determining human faces is improved.

As shown in Fig. 11, in an embodiment, if the human face characteristic information includes the inclined angle of human face in the image, the determining module 83 includes a fourth determining sub-module 111 and a fifth determining sub-module 112.

The fourth determining sub-module 111 is configured to determine a human face with the inclined angle less than a preset angle as a target human face.

The fifth determining sub-module 112 is configured to determine a human face with the inclined angel greater than or equal to the preset angle as the non-target human face.

In this embodiment, the human face may be determined according to the inclined angle of the human face in the image. If the inclined angle is less than the preset angle, the human face is determined as the target human face, if the inclined angle is not less than the preset angle, the human face is determined as the non-target human face. In other words, the orientation of each human face in the image is determined. Characteristic points on each human face are positioned using human face characteristic point positioning algorithm, so as to determine the orientation that each human face has. In a particular example, a human face facing a camera lens is determined as a target human face, i.e., the human face facing a forward is determined as a target human face. If the inclined angle of the human face exceeds a certain angle, the human face may be determined as a non-target human face.

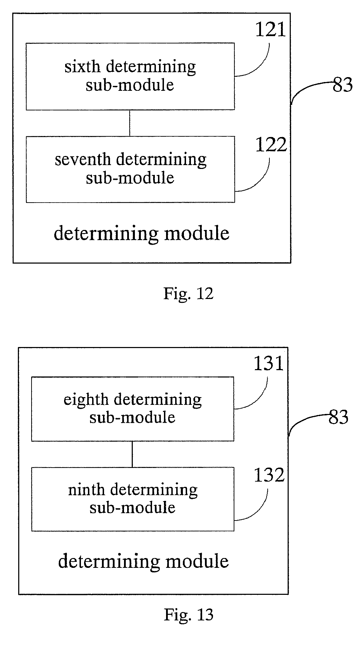

As shown in Fig. 12, in an embodiment, if the human face characteristic information includes the ratio of the area occupied by the human face in the image, the determining module 83 includes a sixth determining sub-module 121 and a seventh determining sub-module 122.

The sixth determining sub-module 121 is configured to determine a human face with the ratio greater than a preset ratio as a target human face.

The seventh determining sub-module 122 is configured to determine a human face with the ratio less than or equal to the preset ratio as a non-target human face.

In this embodiment, the human face may be determined according to the ratio of area occupied by the human face in the image. For example, if the ratio of area occupied by the human face in the image is relatively large, this indicates that the human face may be a main photographed object, and then the human face may be determined as a target human face. If the ratio of area occupied by the human face in the image is relative small, this indicates that the human face may not be the main photographed object, but may be a passenger photographed unintentionally, and then the human face is determined as a non-target human face.

As shown in Fig. 13, in an embodiment, the human face characteristic information includes the number of times of the human face appears in a plurality of images including said image, the determining module 83 includes an eighth determining sub-module 131 and a ninth determining sub-module 132.

The eighth determining sub-module 131 is configured to determine a human face with a number of appearances larger than a preset number of appearances as a target human face.

The ninth determining sub-module 132 is configured to determine a human face with a number of appearances lower than or equal to the preset number of appearances as a non-target human face.

In this embodiment, the human face may be determined according to the number of times the human face appears in all the images. If the number of times the human face appears is relatively large, it indicates that the human face is a target human face. If the number of times the human face appears is relatively low, such as only once, it indicates that the human face belongs to a passenger which is photographed accidentally. In this way, each human face in the image may be accurately determined as the target human face or the non-target human face.

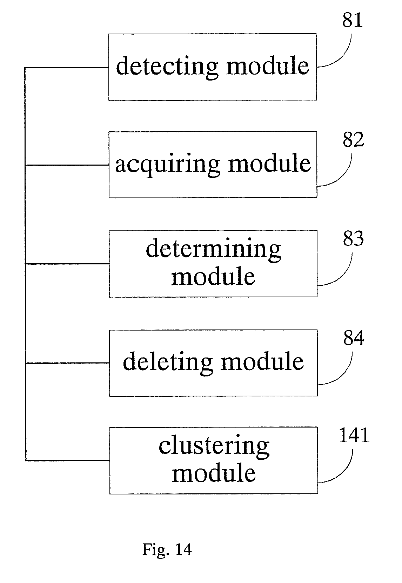

As shown in Fig. 14, in an embodiment, the above apparatus may further include a clustering module 141.

The clustering module 141 is configured to cluster each target human face to obtain at least one human face album, in which each human face album corresponds to one distinct human face.

In this embodiment, after performing the preset deletion process on the non-target human faces, the target human faces may be clustered to obtain at least one human face album. Each human face album after clustering corresponds to one dedicated human face, which is convenient for the user to view.

According to a third aspect of embodiments of the present disclosure, there is provided an image processing apparatus, including:
a processor; and
a memory for storing instructions executable by the processor;
in which the processor is configured to:
   detect an image to identify at least two human faces contained in the image;
   acquire human face characteristic information of each human face in the image;
   determine each human face as a target human face or a non-target human face according to the human face characteristic information; and
   perform a preset deletion process on the non-target human face.

The processor is further configured as that: the human face characteristic information includes at least one of: a position of the human face in the image, an inclined angle of the human face in the image, depth information of the human face in the image, a ratio of an area occupied by the human face in the image and a number of appearances of the human face in a plurality of images including said image.

The processor is further configured as that:
determining each human face as the target human face or the non-target human face according to the human face characteristic information includes:
   determining a target photographed area according to the position of each human face in the image and human face distribution; and
   determining a human face in the target photographed area as the target human face, and determining a human face outside of the target photographed area as the non-target human face.

The processor is further configured as that:
if the human face characteristic information includes the position of the human face in the image or the depth information of the human face in the image, and the at least one human face includes two or more human faces, determining each human face as the target human face or the non-target human face according to the human face characteristic information includes:
   determining a target photographed area according to the position of each human face in the image and human face distribution of the image; and
   determining a human face in the target photographed area as the target human face, and calculating a distance from the target human face to another human face in the image or calculating a difference between depth information of the target human face and depth information of the other one human face in the image;
   determining the other one human face as a target human face if the distance is less than a preset distance or the difference is less than a preset difference; and
   determining the other one human face as a non-target human face if the distance is larger than or equal to the preset distance or the difference is larger than or equal to the preset difference.

The processor is further configured as that:
if the human face characteristic information includes the inclined angle of the human face in the image, determining each human face as a target human face or a non-target human face according to the human face characteristic information includes:
   determining a human face with the inclined angle less than a preset angle as a target human face; and
   determining a human face with the inclined angle larger than or equal to the preset angle as a non-target human face.

The processor is further configured as that:
if the human face characteristic information includes the ratio of the area occupied by the human face in the image, determining each human face as a target human face or a non-target human face according to the human face characteristic information includes:
   determining a human face with the ratio larger than a preset ratio as a target human face; and
   determining a human face with the ratio less than or equal to the preset ratio as a non-target human face.

The processor is further configured as that:
if the human face characteristic information includes the number of appearances of the human face in a plurality of images including said image, determining each human face as a target human face or a non-target human face according to the human face characteristic information includes:
   determining a human face with the number of appearances larger than a preset number of appearances as a target human face; and
   determining a human face with the number of appearances lower than or equal to the preset number of appearances as the non-target human face.

The processor is further configured as that:
the method further includes:
   clustering each target human face to obtain at least one human face album; in which each human face album corresponds to one distinct human face.

With respect to the apparatus in the above embodiments, the specific manners for performing operations for individual modules therein have been described in detail in the embodiments regarding the method, which will not be elaborated herein.

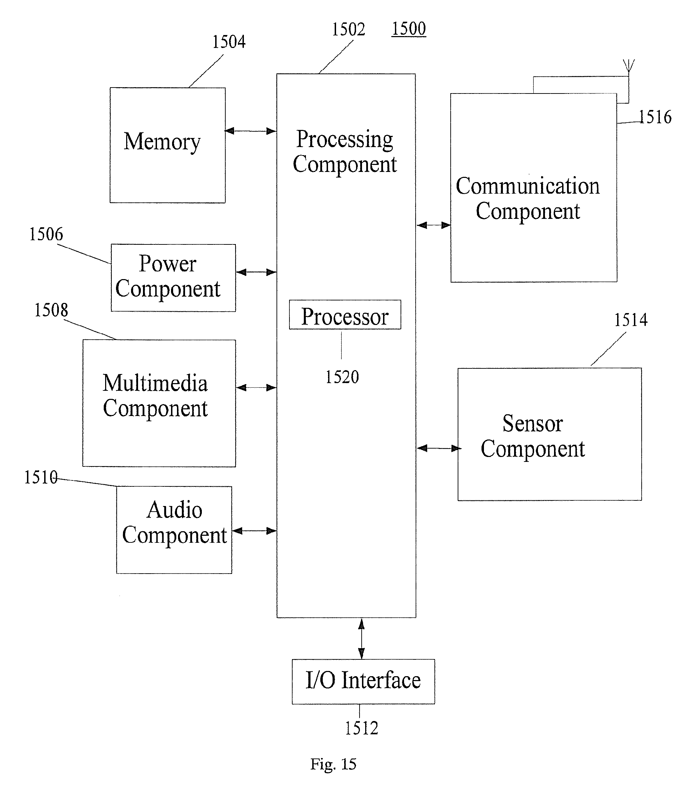

Fig. 15 is a block diagram of an image processing device according to an illustrative embodiment; the device is applied to a terminal device. For example, the device 1500 may be a mobile phone, a computer, a digital broadcast terminal, a messaging device, a gaming console, a tablet, a medical device, exercise equipment, a personal digital assistant, and the like.

The device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer-readable storage medium including instructions, such as a memory 1504 including instructions, the instructions may be executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of the device 1500, causes the device 1500 to perform the above image processing method. The method includes:
detecting an image to identify at least two human face contained in an image;
acquiring human face characteristic information of each human face in the image;
determining each human face as a target human face or a non-target human face according to the human face characteristic information; and
performing a deletion process on the non-target human face.

In an embodiment, the human face characteristic information includes at least one of: a position of the human face in the image, an inclined angle of the human face in the image, depth information of the human face in the image, a ratio of an area occupied by the human face in the image and times of the human face appearing in all images.

In an embodiment, if the human face characteristic information includes the position of the human face in the image, determining each human face as the target human face or the non-target human face according to the human face characteristic information includes:
determining a target photographed area according to the position of each human face in the image and human face distribution; and
determining a human face in the target photographed area as the target human face, and determining a human face outside of the target photographed area as the non-target human face.

In an embodiment, if the human face characteristic information includes the position of the human face in the image or the depth information of the human face in the image, and the at least one human face includes two or more human faces, determining each human face as the target human face or the non-target human face according to the human face characteristic information includes:
determining a target photographed area according to the position of each human face in the image and human face distribution; and
determining a human face in the target photographed area as the target human face, and calculating a distance from the target human face to the other one human face in the image or calculating a difference between depth information of the target human face and depth information of the other one human face in the image;
determining the other one human face as the target human face if the distance is less than a preset distance or the difference is less than a preset difference; and
determining the other one human face as the non-target human face if the distance is larger than or equal to the preset distance or the difference is larger than or equal to the preset difference.

In an embodiment, if the human face characteristic information includes the inclined angle of the human face in the image, determining each human face as the target human face or the non-target human face according to the human face characteristic information includes:
determining a human face with the inclined angle less than a preset angle as the target human face; and
determining a human face with the inclined angle larger than or equal to the preset angle as the non-target human face.

In an embodiment, if the human face characteristic information includes the ratio of the area occupied by the human face in the image, determining each human face as the target human face or the non-target human face according to the human face characteristic information includes:
determining a human face with the ratio larger than a preset ratio as the target human face; and
determining a human face with the ratio less than or equal to the preset ratio as the non-target human face.

In an embodiment, if the human face characteristic information includes the times of the human face appearing in all images, determining each human face as the target human face or the non-target human face according to the human face characteristic information includes:
determining a human face with the times more frequent than preset times as the target human face; and
determining a human face with the times less frequent than or equal to the preset times as the non-target human face.

In an embodiment, the method further includes:
clustering the target human face to obtain a human face album corresponding to the target human face; in which each human face album corresponds to one human face.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. An image processing method, comprising:
detecting (S101) an image to identify at least one human face contained in the image;
acquiring (S102) human face characteristic information of each human face in the image;
determining (S103) each human face as a target human face or a non-target human face according to the human face characteristic information; and
performing (S104) a preset deletion process on each non-target human face.

2. The method according to claim 1, wherein the human face characteristic information comprises at least one of: a position of the human face in the image, an inclined angle of the human face in the image, depth information of the human face in the image, a ratio of an area occupied by the human face in the image and a number of appearances representative of the number of times the human face appears in a plurality of images including said image.

3. The method according to claim 2, wherein said determining each human face as the target human face or the non-target human face according to the human face characteristic information comprises:
determining (S201) a target photographed area according to the position of each human face in the image and human face distribution of said image; and
determining (S202) a human face in the target photographed area as the target human face, and determining (S202) a human face outside of the target photographed area as the non-target human face.

4. The method according to claim 2, wherein if the human face characteristic information comprises the position of the human face in the image or the depth information of the human face in the image, and the at least one human face comprises two or more human faces, said determining each human face as the target human face or the non-target human face according to the human face characteristic information comprises:
determining (S301) a target photographed area according to the position of each human face in the image and human face distribution;
determining (S302) a human face in the target photographed area as the target human face, and calculating a distance from the target human face to another human face in the image or calculating a difference between depth information of the target human face and depth information of another one human face in the image;
determining (S303) the other one human face as a target human face if the distance is less than a preset distance or the difference is less than a preset difference; and
determining (S304) the other one human face as a non-target human face if the distance is larger than or equal to the preset distance or the difference is larger than or equal to the preset difference.

5. The method according to claim 2, wherein if the human face characteristic information comprises the inclined angle of the human face in the image, said determining each human face as the target human face or the non-target human face according to the human face characteristic information comprises:
determining (S401) a human face with the inclined angle less than a preset angle as the target human face; and
determining (S402) a human face with the inclined angle larger than or equal to the preset angle as the non-target human face.

6. The method according to claim 2, wherein if the human face characteristic information comprises the ratio of the area occupied by the human face in the image, said determining each human face as the target human face or the non-target human face according to the human face characteristic information comprises:
determining (S501) a human face with the ratio larger than a preset ratio as the target human face; and
determining (S502) a human face with the ratio less than or equal to the preset ratio as the non-target human face.

7. The method according to claim 2, wherein if the human face characteristic information comprises a number of appearances representative of the number of times the human face appears in a plurality of images including said image, said determining each human face as the target human face or the non-target human face according to the human face characteristic information comprises:
determining (S601) a human face as a target human face if the number of appearances of said human face is larger than a preset number of appearances; and
determining (S602) a human face as a non-target human face if the number of appearances of said human face is less than or equal to the preset number of appearances.

8. The method according to any one of claims 1 to 7, further comprising:
clustering (S701) each target human face to obtain at least one human face album; wherein each human face album corresponds to one distinct human face.

9. An image processing apparatus, comprising:
a detecting module (81), configured to detect an image to identify at least one human face contained in the image;
an acquiring module (82), configured to acquire human face characteristic information of each human face detected by the detecting module in the image;
a determining module (83), configured to determine each human face as a target human face or a non-target human face according to the human face characteristic information acquired by the acquiring module; and
a deleting module (84), configured to perform a preset deletion process on each non-target human face determined by the determining module.

10. The apparatus according to claim 9, wherein the human face characteristic information comprises at least one of: a position of the human face in the image, an inclined angle of the human face in the image, depth information of the human face in the image, a ratio of an area occupied by the human face in the image and a number of appearances representative of the number of times the human face appears in a plurality of images including said image.

11. The apparatus according to claim 10, wherein the determining module (83) comprises:
a first area determining sub-module (91), configured to determine a target photographed area according to the position of each human face in the image and human face distribution of said image; and
a first determining sub-module (92), configured to determine a human face in the target photographed area determined by the first area determining sub-module as the target human face, and determine a human face outside of the target photographed area as the non-target human face.

12. The apparatus according to claim 10, wherein if the human face characteristic information comprises the position of the human face in the image or the depth information of the human face in the image and the at least one human face comprises two or more human faces, the determining module (83) comprises:
a second area determining sub-module (101), configured to determine a target photographed area according to the position of each human face in the image and human face distribution;
a calculating sub-module (102), configured to determine a human face in the target photographed area as the target human face, calculate a distance from the target human face to another human face in the image or calculate a difference between depth information of the target human face and depth information of another human face in the image;
a second determining sub-module (103), configured to determine the other one human face as the target human face if the distance is less than a preset distance or the difference is less than a preset difference; and
a third determining sub-module (104), configured to determine the other one human face as the non-target human face if the distance is larger than or equal to the preset distance or the difference is larger than or equal to the preset difference.

13. The apparatus according to claim 10, wherein if the human face characteristic information comprises the inclined angle of the human face in the image, the determining module comprises:
a fourth determining sub-module (111), configured to determine a human face with the inclined angle less than a preset angle as a target human face; and
a fifth determining sub-module (112), configured to determine a human face with the inclined angle larger than or equal to the preset angle as a non-target human face.

14. The apparatus according to any one of claims 9 to 13, further comprising:
a clustering module (141), configured to cluster each target human face to obtain a human face album; wherein each human face album corresponds to one distinct human face.

15. A computer program including instructions for executing the steps of the image processing method according to any one of claims 1 to 8 when said program is executed by a computer.
